# FASCICULE DE BREVET EUROPEEN

(11) **EP 3 105 306 B1**
(45) Date de publication et mention de la délivrance du brevet: **20.04.2022**
(21) Numéro de dépôt: 15703615.3
(22) Date de dépôt: 11.02.2015
(51) Int. Cl.: C10L 9/08, C10L 5/44

(54) **PROCÉDÉ DE TRANSFORMATION D'UNE BIOMASSE EN AU MOINS UN BIOCHARBON**
VERFAHREN ZUR UMWANDLUNG VON BIOMASSE IN MINDESTENS EINE BIOKOHLE
PROCESS FOR CONVERTING A BIOMASS INTO AT LEAST ONE BIOCHAR

(30) Priorité: 11.02.2014 FR 1451052
(43) Date de publication de la demande: 21.12.2016
(73) Titulaire: Biocarbon Industries Sarl, 2227 Luxembourg (LU)
(72) Inventeur: VIESLET, Jean-Paul, 4000 Liège (BE)
(74) Mandataire: Germain Maureau
(86) Numéro de dépôt international: PCT/EP2015/052866
(87) Numéro de publication internationale: WO 2015/121299

(56) Documents cités:
- EP-A2- 2 287 278
- WO-A2-2012/158112
- FR-A1- 2 591 611
- GB-A- 2 479 924
- US-A1- 2011 179 701
- US-A1- 2012 042 567

## Description

La présente invention concerne un procédé de transformation d'une biomasse, en au moins un biocharbon.

Par biocharbon selon l'invention, on entend un solide riche en carbone, stable, issu d'un traitement thermique d'une biomasse adapté à de nombreuses applications industrielles. Ainsi, et de manière non limitative, il constitue un combustible à haut pouvoir calorifique, représentant une nouvelle alternative dans le domaine des énergies renouvelables. Il constitue également un agent fertilisant à usage agricole pour l'amendement des sols. Il constitue aussi un produit destiné à l'industrie chimique, par exemple comme catalyseur. Il est encore un excellent adsorbant et constitue un agent de purification, de décoloration, de décontamination et/ou de désodorisation, utilisable dans de nombreux domaines industriels. Il peut être mis en forme dans toute présentation selon sa destination, telle que poudre, grains...

Le procédé de l'invention est plus spécifiquement décrit en référence à une biomasse lignocellulosique, mais par analogie, il peut être appliqué à d'autres biomasses.

Des procédés de transformation de biomasse lignocellulosique en combustibles sont déjà connus mettant notamment en jeu une étape de torréfaction. La torréfaction d'une biomasse consiste à la chauffer graduellement à température modérée, généralement entre 190°C et 250°C, dans une atmosphère dépourvue d'oxygène, et éventuellement sous pression. Ce traitement entraîne une élimination quasi complète de l'eau de la biomasse et une modification partielle de sa structure moléculaire, provoquant un changement de certaines de ses propriétés. En particulier, ce traitement thermique produit une dépolymérisation de l'hémicellulose, rendant la biomasse torréfiée pratiquement hydrophobe et friable, tout en améliorant son pouvoir calorifique.

Ainsi, le document EP2287278A2 décrit un procédé de torréfaction d'une biomasse lignocellulosique comprenant une étape de séchage de la biomasse pour en retirer environ 95% d'humidité, puis une étape de torréfaction dans un réacteur porté à une température en théorie de 100-1000°C, en pratique de 220-300°C, à une pression de 1-50 bar, de préférence 5-20 bar, dans une atmosphère exempte d'oxygène, et enfin une étape de refroidissement de la biomasse torréfiée, ce procédé prévoyant un système de recyclage des gaz.

On connait aussi selon le document WO2013/003615A2, un dispositif pour torréfier une biomasse riche en hémicellulose comme le bois, et un procédé de traitement de cette biomasse mis en œuvre dans ce dispositif, comprenant une étape de séchage de la biomasse, une étape de torréfaction réalisée à une température de 200-250°C, sous une pression d'au moins 3 bar, en atmosphère inerte, et une étape de refroidissement. Le dispositif est constitué d'un corps vertical dans lequel est disposée une superposition de plateaux constituant des compartiments de traitement de la biomasse. Ces compartiments sont équipés d'ouvertures pour laisser s'écouler la biomasse en cours de traitement ou traitée, et les gaz de traitement ou produits peuvent être évacués par des tubulures pour être recyclés.

Selon l'article J. Wannapeera et N. Worasuwannarak, Journal of Analytical and Applied Pyrolysis 96 (2012) 173-180, les auteurs ont étudié, à l'échelle du laboratoire, soit sur quelques grammes, l'influence de la pression dans un procédé de transformation par torréfaction d'une biomasse à base de *Leucaena leucocephala,* un arbre tropical. Ce procédé comprend les étapes suivantes ;
- La biomasse est déchiquetée puis broyée en particules d'une taille <75µm ;
- Les particules sont ensuite séchées dans un four sous vide à 70°C pendant 24h ;
- Les particules sont placées dans un réacteur sous atmosphère inerte, qui est alors introduit et maintenu dans un fourneau à une température de 200- 250°C et une pression de 1-40 bar, pendant 30 min ;
- Au bout de ces 30 min, le réacteur est immergé dans de l'eau pour stopper la réaction ;
- Le produit issu de cette carbonisation est séché dans un four pendant 2-3h puis analysé.

Les valeurs de pouvoir calorifique supérieur (PCS) les plus élevées sont obtenues pour un solide issu d'une torréfaction à une température de l'ordre de 250°C et une pression de 40 bar. Ces travaux ont mis en évidence l'effet favorable de la pression sur les réactions de torréfaction dans ces conditions.

Les traitements de torréfaction sous pression connus tels que ceux décrits précédemment produisent des solides possédant un pouvoir calorifique inférieur (PCI) élevé, généralement de l'ordre de 19 à 23 MJ/kg. Le PCI d'un solide obtenu selon le procédé décrit dans EP2287278A2 est effectivement de cet ordre Les auteurs y déclarent que leur procédé de torréfaction entraînerait une réduction de la masse de 30% avec une perte de 10% de l'énergie globale, ce qui signifie que l'énergie du solide obtenu, correspondant à 90% de l'énergie de la biomasse séchée de départ, est concentrée dans 70% de la masse de la biomasse séchée de départ, ce qui conduit à une concentration du PCI par unité de masse de 0,9/0,7, soit de 1,28. Le taux annoncé de séchage de la biomasse étant de 5%, équivalant à celui d'un granulé de bois du commerce dont le PCI est de l'ordre de 15 à 18 MJ/kg, le PCI du solide obtenu selon EP2287278A2 est de l'ordre de 19 à 23 MJ/kg. Ces valeurs sont d'ailleurs celles annoncées par de nombreux développeurs dans ce domaine.

Le besoin est cependant toujours grandissant de développer des procédés plus performants, moins énergivores, dont les investissements sont moins coûteux, plus aisés à maîtriser et permettant d'obtenir un combustible de meilleure qualité.

Les auteurs de la présente invention ont découvert que la mise en œuvre d'une torréfaction dans des conditions spécifiques permettait d'initier un phénomène exothermique spontané, produisant un solide combustible dont le PCI est très élevé, bien supérieur à celui des combustibles résultant des procédés de transformation discutés précédemment. Par ailleurs, ce solide combustible possède une teneur en carbone très élevée, généralement supérieure à 80% massiques et une teneur en oxygène réduite, de l'ordre de 10% massiques ou moins. Les auteurs ont aussi constaté que ce phénomène se manifestait avec de nombreux types de biomasse.

Ce phénomène exothermique est empêché dans les procédés connus car il est considéré comme un facteur défavorable au bilan énergétique. Les auteurs de l'invention ont justement démontré que c'est le développement de ce phénomène qui permet de produire un biocharbon plus riche en carbone, et donc plus calorifique.

Deux conditions sont essentielles pour que se manifeste ce phénomène. Elles résident dans un contrôle précis de la granulométrie de la biomasse impliquée et dans le séchage de cette dernière avant l'étape de torréfaction, celui-ci devant être complet. L'étape de séchage préalable doit donc retirer l'humidité totale de la biomasse, pour atteindre un taux d'humidité voisin de 0. Plus on se rapproche de l'état anhydre de la biomasse traitée, plus le procédé est efficace.

Ainsi, l'invention concerne un procédé de transformation d'une biomasse en au moins un biocharbon, comprenant les étapes suivantes :
(a) On dispose d'une biomasse broyée et séchée, ladite biomasse contenant au moins 30% d'une biomasse lignocellulosique, en masse par rapport à la masse sèche de ladite biomasse broyée et séchée, ladite biomasse se présentant sous la forme de particules de dimensions homogènes et ayant un taux d'humidité voisin de 0 ;
(b) On chauffe progressivement cette biomasse à une température supérieure à 140°C et inférieure à 350°C, dans un flux gazeux inerte dépourvu d'oxygène, sous une pression comprise entre 1 à 40 bar ;
(c) On laisse la réaction se dérouler en maintenant la température dans l'intervalle de 300-700°C et la pression dans l'intervalle de 1-40 bar,
(d) On refroidit à une température d'au plus 100°C, la biomasse issue de (d), dans un flux gazeux inerte dépourvu d'oxygène, et
(e) On récupère le biocharbon.

Ce procédé permet d'obtenir un solide présentant des caractéristiques qui en font notamment un combustible performant, dont la concentration en carbone est supérieure à 85% massiques et dont le PCI est compris entre 25 et 35 MJ/kg, à partir d'un bois dont la concentration en carbone est de l'ordre de 45% massiques, dont la concentration en oxygène est de l'ordre de 45% massiques et dont le PCI est de l'ordre de 17 MJ/kg. Ce procédé conduit aussi à une très forte réduction de la teneur en oxygène, qui atteint des valeurs de l'ordre de 10% massiques, entraînant une réduction équivalente de la masse globale du produit combustible.

Par transformation d'une biomasse en au moins un biocharbon, on entend selon l'invention, qu'un ou des gaz combustibles sont coproduits. Ils peuvent être injectés à l'étape (b) du procédé, et aussi être utilisés pour alimenter toute autre installation thermique ou chimique.

L'étape (b) du procédé porte la matière à une température au moins supérieure à la température d'ébullition de l'eau à la pression de travail, le taux d'humidité de la matière traitée dans les étapes subséquentes est donc pratiquement nul, de préférence nul.

Avant d'exposer plus en détail l'invention, certains termes employés dans le texte sont ci-après définis et les méthodes d'analyse des différents paramètres mesurés ci-après renseignées.

Par biomasse lignocellulosique selon l'invention, on entend des matières organiques d'origine essentiellement végétale comprenant au moins un constituant choisi parmi l'hémicellulose, la cellulose, la lignine, des hydrates de carbone et des oligo-saccharides. A titre d'exemple, une biomasse selon l'invention est choisie parmi ou issue des produits et sous-produits des activités de foresterie, de l'agriculture et l'agroalimentaire.

Les températures indiquées, sauf stipulation contraire, sont les températures à cœur de la biomasse traitée.

Le taux d'humidité de la biomasse représente sa teneur en eau ; il est exprimé en pourcentage en masse d'eau par rapport à la masse de la biomasse brute. Plusieurs méthodes permettent de le mesurer, celle retenue par les auteurs de la présente invention est la méthode de Karl-Fisher, bien connue de l'homme du métier. Un échantillon de biomasse broyé est maintenu pendant 24 heures dans du méthanol déshydraté sous agitation puis le taux d'humidité est déterminé à l'aide de l'appareil de titration volumétrique Metrohm 870KF Trinito plus.

Dans le cadre de ce procédé, des caractéristiques essentielles d'un biocharbon, par exemple quand il est utilisé comme produit combustible sont son taux d'humidité, son pouvoir calorifique inférieur (PCI), son taux de cendres et sa composition élémentaire (analyse ultime).

Son taux d'humidité est mesuré à l'aide de la méthode décrite ci-dessus.

Le pouvoir calorifique d'un combustible représente la quantité d'énergie contenue dans une unité de masse de combustible. On distingue le pouvoir calorifique inférieur (PCI) et le pouvoir calorifique supérieur (PCS). Ils répondent aux définitions et sont mesurés, conformément à la norme ISO 1928.

Le PCS est mesuré dans un calorimètre à combustion IKA C 5000.

Le PCI est calculé ensuite à partir d'une composition élémentaire de la biomasse. Une analyse élémentaire de cette biomasse est réalisée dans un appareil FISONS EA 1108.

Le taux de cendres du combustible est obtenu par incinération de l'échantillon broyé. Le chauffage est réalisé par paliers jusqu'à 815°C et maintenu à cette température jusqu'à l'obtention de cendres qui sont ensuite pesées. Le taux de cendres est exprimé en pourcentage en masse par rapport à la masse de l'échantillon.

Comme dit précédemment, les auteurs ont observé que l'état physique de la biomasse soumise à l'étape de chauffage (b) est important pour atteindre les performances du procédé de l'invention. Ils ont en outre constaté qu'il était préférable d'alimenter le procédé par une matière présentant une faible dispersion granulométrique. La biomasse doit donc être préalablement broyée et se présente avantageusement sous la forme de particules de formes diverses, mais de dimensions homogènes. Ainsi, les particules issues de ce broyage peuvent se présenter sous la forme de grains, de copeaux, de bâtonnets, d'aiguilles et/ou tout autre aspect. Quelles que soient leurs formes, il est important que les dimensions des particules soient sensiblement homogènes. Par particules de dimensions homogènes, on entend qu'au moins 50%, de préférence au moins 60%, mieux encore au moins 70% et plus, des particules, en poids par rapport à la masse séchée, sont constitués de particules dont la plus petite dimension est d'au moins 0,5 mm. Cette plus petite dimension correspond à l'épaisseur. De préférence, la plus grande dimension desdites particules dont la plus petite dimension est d'au moins 0,5 mm, est d'au plus 40 mm. A titre d'illustration, les particules peuvent prendre la forme de grains dont les dimensions varient de 0,5-5 mm, de copeaux ou d'aiguilles de 0,5-3 mm d'épaisseur et d'au plus 40 mm de longueur, mieux encore de 10-25 mm de longueur. Il est préférable que les particules soient aussi homogènes que possible, en termes de dimensions comme dit précédemment, mais aussi de forme. Ainsi, on optera pour un broyage qui produit une matière se présentant majoritairement sous forme de grains et, de préférence, dont au moins 50% de la masse rapport à la masse de la biomasse sèche ont une taille variant de 0,5-4 mm. Dans une autre variante, on retiendra un broyage qui produit une matière se présentant majoritairement sous forme de copeaux et/ou d'aiguilles et, de préférence, dont au moins 50% en masse par rapport à la masse de la biomasse sèche ont une épaisseur d'au moins 0,5 mm et une longueur d'au plus 40 mm ; avantageusement, la matière sous forme de copeaux et/ou d'aiguilles dont au moins 50% ont une épaisseur variant de 0,5-3 mm et/ou une longueur de 10-25 mm.

Une trop grande proportion de fines particules entraîne une forte production de goudrons qui pourrait être préjudiciable à l'efficacité du procédé. Une trop grande proportion de grosses particules affaiblit le rendement du procédé en ce que ces particules ne pourront pas être converties efficacement en biocharbon.

Le procédé de l'invention répond avantageusement aux caractéristiques décrites ci-après, considérées seules ou en combinaison. Elles concourent à une augmentation de l'efficacité du procédé.

L'étape (b) peut être réalisée en deux étapes, une étape (b1) selon laquelle la biomasse est préchauffée à une température d'au moins 120°C, de préférence d'au moins 130°C et mieux encore d'au moins 140°C, et une étape (b2) selon laquelle la biomasse préchauffée à l'étape (b1) est chauffée à une température d'au moins 220°C, de préférence 230°C, voire d'au moins 240°C.

A l'étape (b1), de préférence, la température est réglée entre 180 et 220°C et/ou la pression est réglée entre 3 et 14 bar.

A l'étape (b2), de préférence, la température est réglée entre 240 et 300°C et/ou la pression est réglée entre 3 et 14 bar.

Les étapes (b1) et (b2) peuvent partiellement se chevaucher.

En fin de l'étape (b), le solide se trouve dans les conditions de déclenchement d'une réaction de carbonisation spontanée. A l'étape (c), la température est contrôlée pour être maintenue entre 300 et 700°C, de préférence, elle est maintenue entre 350 et 500°C, mieux encore entre 350 et 400°C.

Le procédé de l'invention peut être conduit en batch ou en continu. En batch, les étapes (b) et (c) sont réalisées dans la même enceinte. De préférence, le procédé est mise en œuvre en continu, les étapes (b) ou (b1) et (b2), (c), et (d) étant effectuées dans au moins deux compartiments différents. Selon une variante du procédé de l'invention, les étapes (b) ou (b1) et (b2), (c), et (d) sont réalisés dans des compartiments différents, respectivement, un premier, et éventuellement un second, un troisième et un quatrième compartiments. Cette variante est a priori plus performante et économique, notamment elle permet de récupérer la chaleur des gaz produits aux étapes (b) et (c), et éventuellement les recycler, vers l'amont du procédé. Elle permet de plus un fonctionnement plus régulier des installations où l'on met en œuvre le procédé avec une régulation plus constante. Alternativement, les étapes (b) et (c) peuvent être effectuées dans un même compartiment. Aussi, l'étape (b) peut être réalisée à l'intérieur d'une chaudière d'une unité de génération électrique et/ou thermique.

Les différents compartiments sont avantageusement équipés des moyens suivants :
Le premier compartiment, pour la mise en œuvre de l'étape (b1), est équipé de moyens de préchauffage par convection et/ou par lit fluidisé et de moyens de contrôle de la température ; de préférence, le transfert de chaleur est effectué par convection.

Le second compartiment, pour la mise en œuvre de l'étape (b2), est équipé de moyens de chauffage par convection, conduction et/ou rayonnement et de moyens de contrôle de la température ; de préférence, le transfert de chaleur est effectué par rayonnement.

Le troisième compartiment, pour la mise en œuvre de l'étape (c), est équipé de moyens de contrôle de la température et de la pression. En particulier, tous les moyens de contrôle de la température utiles sont éligibles pour équilibrer la quantité de chaleur produite par les réactions avec la charge thermique.

Le quatrième compartiment, pour la mise en œuvre de l'étape (d), est équipé de moyens de refroidissement par convection et/ou conduction.

Comme indiqué précédemment, dans une mise en œuvre en continu du procédé, les gaz sont recyclés ; ainsi la chaleur émise par le phénomène exothermique à l'étape (c) dans le troisième compartiment est récupérée et est recyclée dans l'un et/ou l'autre des premier et second compartiments et/ou pour sécher la biomasse nécessaire à l'étape (a). Il est aussi possible d'organiser une circulation, à contre-courant de la matière, des gaz générés par les étapes (b2) et (c).

Dans une telle variante, le procédé peut être mis en œuvre en l'absence de tout apport de gaz inerte extérieur. On peut ainsi envisager qu'il soit totalement autonome en terme d'énergie, depuis les étapes en amont, dont traitement de la biomasse fraîche jusqu'aux étapes en aval, dont la mise en forme du solide combustible et dans ce cas, une unité de cogénération sera de préférence installée.

Dans le procédé de l'invention, à l'étape d), le temps de traitement varie de l'ordre de 50 secondes à 3 minutes. Les temps courts de réaction sont donc un autre avantage du procédé de l'invention.

Le procédé de l'invention s'applique à la transformation de toute biomasse. De préférence, la biomasse est lignocellulosique. Il est notamment destiné à la conversion de toute biomasse lignocellulosique issue des produits et sous-produits des activités de foresterie, de l'agriculture et de l'agroalimentaire.

L'invention concerne aussi le biocharbon susceptible d'être obtenu par le procédé défini ci-dessus, ledit biocharbon ayant une teneur en carbone supérieure à 80% massiques et une teneur en oxygène en une teneur inférieure ou égale à 10% massique.

En particulier, il présente un pouvoir calorifique inférieur (PCI) d'au moins 25 MJ/kg, de préférence d'au moins 30 MJ/kg, qui peut atteindre 35 MJ/kg et en cela, il constitue un combustible très calorifique.

L'invention est ci-après illustrée par des exemples de traitement de biomasses d'origines diverses, par un procédé de transformation en batch.

Préalablement à l'étape c), c'est-à-dire à l'entrée du réacteur, tous les exemples sont réalisés dans les conditions suivantes.

10 à 15 kg de biomasse, broyée et séchée, sont chargés dans un tube en acier inoxydable de type AISI 310S, de 200 mm de diamètre et de 1800 mm de hauteur. Le tube est rempli d'azote et son inertage (absence totale d'oxygène) est contrôlé. Ensuite, on fait passer un courant gazeux d'azote préchauffé à une température de 200°C environ pour sécher totalement les matières, ce qui est vérifié d'une part par une mesure de température au sein de la matière, qui doit être supérieure en tout cas à la température d'ébullition de l'eau, et d'autre part par une mesure de la composition du gaz. Le temps de séchage varie de 1h à 1h30, il permet d'atteindre un taux d'humidité de 0.

Enfin, on met le réacteur sous pression d'azote et on entame le chauffage progressif des parois du réacteur, ce qui initie la transformation réactive.

### Exemple 1 : Procédé de transformation de planures et de sciures de résineux selon l'invention - Pression 40 bar

Des planures provenant d'une fabrique de charpentes, dont au moins 70 à 80% sont sous forme d'aiguilles de 1 mm d'épaisseur et de 20 mm de longueur, et des sciures fines de résineux de granulométrie 0,2-0,5 mm sont soumises au protocole de préparation ci-dessus.

Les résistances du réacteur sont ensuite progressivement portées à une température de 250°C, puis de 270°C. Dès 160°C, on observe une légère exothermicité globale, puis le phénomène exothermique s'emballe à partir de 270°C provoquant une élévation spontanée de la température jusqu'à 700°C.

Le produit est ensuite refroidi à une température inférieure à 100°C; environ 30 minutes sont nécessaires.

Le produit issu de cette transformation ressemble à une mousse de carbone très poreuse et très friable. Ces caractéristiques sont les suivantes :
Le PCI moyen obtenu est de 32,5 MJ/kg, atteignant localement 35 MJ/kg. La variation du PCI que l'on peut observer résulte de la mise en œuvre en batch du procédé.

Le rendement énergétique global obtenu est de 84,8 %, dont 20 % dans le flux gazeux et 80 % dans le flux solide. Le rendement massique obtenu sur masse anhydre est de 46,2 %.

### Exemple 2 : Procédé de transformation de planures et des sciures de résineux selon l'invention - Pression 10 bar

Des planures provenant d'une fabrique de charpentes, dont au moins 70 à 80% sont sous forme d'aiguilles de 1 mm d'épaisseur et de 20 mm de longueur, et des sciures fines de résineux de granulométrie 0,2-0,5 mm sont soumises au protocole de préparation ci-dessus.

Les résistances du réacteur sont ensuite progressivement portées à une température de 250°C, puis de 270°C. Dès 160°C, on observe une légère exothermicité globale, puis le phénomène exothermique s'emballe à partir de 270°C provoquant une élévation de la température jusqu'à 400°C.

Le produit est ensuite refroidi à une température inférieure à 100°C; environ 30 minutes sont nécessaires.

Les caractéristiques du produit combustible ainsi obtenues sont les suivantes :
Le PCI moyen obtenu est de 32,5 MJ/kg, atteignant localement 34,7 MJ/kg.

Le rendement énergétique global obtenu est de 86,5% et le rendement massique obtenu sur masse anhydre est de 51,6 %.

### Exemple 3 : Procédé de transformation de sciures de bois dur - Pression 5 bar

Des sciures de bois dur, à savoir d'un mélange hêtre et chêne 80/20, provenant d'une fabrique d'escaliers et de portes, d'une granulométrie de 0,1-0,8 mm, sont soumises au protocole de préparation ci-dessus.

Les résistances du réacteur sont ensuite progressivement portées à une température de 250°C, puis de 280°C. Dès 280°C, on observe une réaction exothermique spontanée très marquée. La réaction porte la température à 510°C.

Le produit est ensuite refroidi à une température inférieure à 100°C; environ 30 minutes sont nécessaires.

Les caractéristiques du produit combustible ainsi obtenues sont les suivantes :
Le PCI moyen obtenu est de 33,1 MJ/kg, atteignant localement 33,7 MJ/kg.

On obtient par cette transformation un rendement énergétique global de 77,0 %, et un rendement massique sur masse anhydre de 43,3 %.

Les auteurs ont constaté une forte production de goudrons induite par une présence importante de matière de fine granulométrie.

### Exemple 4 : Procédé de transformation de matières fraîches « tout venant » - Pression 10 bar

Une biomasse fraîche, essentiellement constituée de bouleau fraîchement coupé et déchiqueté avec feuilles, branchettes et écorces, est séchée à l'air libre, puis broyée et séchée. Son épaisseur moyenne est de l'ordre de 15 mm, pour une longueur de 25 mm. Elle est soumise au protocole de préparation ci-dessus.

Les résistances du réacteur sont ensuite progressivement portées à une température de 250°C, puis de 270°C. Le phénomène exothermique s'emballe à partir de 270°C, provoquant une élévation de la température jusqu'à 500°C.

Le produit est ensuite refroidi à une température inférieure à 100°C; environ 30 minutes sont nécessaires.

Les caractéristiques du produit combustible ainsi obtenues sont les suivantes :
Le PCI moyen obtenu est de 30,5 MJ/kg, atteignant localement 31,1 MJ/kg.

On obtient par cette transformation un rendement énergétique global de 65,3 %, et un rendement massique sur masse anhydre de 42,1 %.

En conclusion, alors que l'ensemble des technologies de torréfaction, telles que celle qui fait l'objet du document EP 287278A2, annonce les résultats obtenus suivants pour un bois à 95% de matière sèche et un PCI de 17MJ/K : une réduction de masse de 30%, un PCI obtenu de 21MJ/K et un facteur de concentration d'énergie par unité de masse globale de 1,28, le procédé de l'invention montre une réduction de masse de 55%, un PCI obtenu d'au moins 30 MJ/K, ce qui donne une concentration de l'énergie par unité de masse globale de 1,76.

## Revendications

1. Procédé de transformation d'une biomasse en au moins un biocharbon, comprenant les étapes suivantes :
(a) On dispose d'une biomasse broyée et séchée, ladite biomasse contenant au moins 30% d'une biomasse lignocellulosique, en masse par rapport à la masse sèche de la biomasse broyée et séchée, ladite biomasse se présentant sous la forme de particules de dimensions homogènes et ayant un taux d'humidité voisin de 0 ;
(b) On chauffe progressivement cette biomasse à une température supérieure à 140°C et inférieure à 350°C, dans un flux gazeux dépourvu d'oxygène, sous une pression comprise entre 1 et 40 bar ;
(c) On laisse la réaction se dérouler en maintenant la température dans l'intervalle de 300-700°C et la pression dans l'intervalle de 1-40 bar,
(d) On refroidit à une température d'au plus 100°C, la biomasse issue de (c), dans un flux gazeux dépourvu d'oxygène, et
(e) On récupère le biocharbon,

2. Procédé selon la revendication 1, **caractérisé en ce qu'**on obtient un gaz combustible comme co-produit.

3. Procédé selon la revendication 1 ou 2, **caractérisé en ce que** la biomasse broyée est sous forme de particules dont au moins 50% en poids par rapport à la masse séchée sont constitués de particules dont la plus petite dimension est d'au moins 0,5 mm.

4. Procédé selon la revendication 3, **caractérisé en ce que** la biomasse broyée est sous forme de particules dont au moins 50% en poids par rapport à la masse séchée sont constitués de particules dont la plus petite dimension est d'au moins 0,5 mm et dont la plus grande dimension est d'au plus 40 mm.

5. Procédé selon l'une quelconque des revendications 1 à 4, **caractérisé en ce que** l'étape (b) est réalisée en deux sous-étapes, une étape (b1) selon laquelle la biomasse est préchauffée à une température supérieure à 120°C et une étape (b2) selon laquelle la biomasse préchauffée à l'étape (b1) est chauffée une température supérieure à 220°C.

6. Procédé selon la revendication 5, **caractérisé en ce que** l'étape (b1) est réalisée à une température réglée entre 180 et 220°C.

7. Procédé selon la revendication 5 ou 6, **caractérisé en ce que** l'étape (b2) est réalisée à une température réglée entre 240 et 300°C.

8. Procédé selon l'une quelconque des revendications précédentes, **caractérisé en ce que** l'étape (b) est réalisée à une pression variant de 3 à 14 bar.

9. Procédé selon l'une quelconque des revendications précédentes, **caractérisé en ce qu'**à l'étape (c), la température est maintenue entre 350 et 500°C.

10. Procédé selon l'une quelconque des revendications précédentes, **caractérisé en ce que** les étapes (b) ou (b1) et (b2), (c) et (d) sont effectuées dans au moins deux compartiments différents et le procédé est continu.

11. Procédé selon la revendication 10, **caractérisé en ce que** l'étape (b1) est effectuée dans un premier compartiment, ledit premier compartiment étant équipé de moyens de préchauffage par convection et/ou par lit fluidisé.

12. Procédé selon la revendication 11, **caractérisé en ce que** l'étape (b2) est effectuée dans un second compartiment, ledit second compartiment étant équipé de moyens de chauffage par rayonnement.

13. Procédé selon la revendication 12, **caractérisé en ce que** l'étape (c) est effectuée dans un troisième compartiment, ledit compartiment étant équipé de moyens de contrôle de la température et de la pression.

14. Procédé selon la revendication 13, **caractérisé en ce que** l'étape (d) est effectuée dans un quatrième compartiment, ledit compartiment étant équipé de moyens de refroidissement par convection et/ou par conduction.

15. Procédé selon la revendication 13 ou 14, **caractérisé en ce que** la chaleur émise par la réaction à l'étape (c) dans le troisième compartiment est récupérée et est recyclée dans l'un et/ou l'autre des premier et second compartiments et/ou pour sécher la biomasse nécessaire à l'étape (a).

16. Procédé selon l'une quelconque des revendications précédentes, **caractérisé en ce que** les gaz générés aux étapes (b) et (c) sont remis en circulation vers l'amont du procédé, à contre-courant de la matière.

17. Procédé selon l'une quelconque des revendications précédentes, **caractérisé en ce que** la biomasse est une biomasse lignocellulosique comprenant au moins un constituant choisi parmi l'hémicellulose, la cellulose, la lignine, des hydrates de carbone et des oligosaccharides.

18. Procédé selon l'une quelconque revendication précédentes, **caractérisé en ce que** l'étape (b) est réalisée à l'intérieur d'une chaudière d'une unité de génération électrique et/ou thermique.

19. Procédé selon l'une quelconque des revendications précédentes, **caractérisé en ce qu'**il peut être mis en œuvre en l'absence de tout apport de gaz inerte extérieur.

20. Biocharbon susceptible d'être obtenu par le procédé selon l'une quelconque des revendications 1 à 19, ledit biocharbon ayant une teneur en carbone supérieure à 80% massiques et une teneur en oxygène en une teneur inférieure ou égale à 10% massique.

21. Biocharbon selon la revendication 20, **caractérisé en ce qu'**il présente un pouvoir calorifique inférieur (PCI) d'au moins 30 MJ/kg.

## Patentansprüche

1. Verfahren zur Umwandlung einer Biomasse in mindestens eine Biokohle, umfassend die folgenden Schritte:
(a) Bereitstellen einer zerkleinerten und getrockneten Biomasse, wobei die Biomasse mindestens 30 Massen-% einer Lignocellulose-Biomasse bezogen auf die getrocknete Masse der zerkleinerten und getrockneten Biomasse enthält, wobei die Biomasse in der Form von Teilchen mit homogenen Abmessungen vorliegt und einen Feuchtigkeitsgehalt nahe 0 aufweist;
(b) allmähliches Erhitzen dieser Biomasse bei einer Temperatur von mehr als 140 °C und weniger als 350 °C in einem Gasstrom ohne Sauerstoff unter einem Druck, der zwischen 1 und 40 bar liegt;
(c) Ablaufenlassen der Reaktion durch Aufrechterhalten der Temperatur im Bereich von 300-700 °C und des Drucks im Bereich von 1-40 bar,
(d) Abkühlen der aus (c) hervorgehenden Biomasse auf eine Temperatur von höchstens 100 °C in einem Gasstrom ohne Sauerstoff und
(e) Gewinnen der Biokohle.

2. Verfahren nach Anspruch 1, **dadurch gekennzeichnet, dass** ein brennbares Gas als Nebenprodukt erhalten wird.

3. Verfahren nach Anspruch 1 oder 2, **dadurch gekennzeichnet, dass** die zerkleinerte Biomasse in der Form von Teilchen ist, von denen mindestens 50 Gew.-% bezogen auf die getrocknete Masse aus Teilchen bestehen, deren kleinste Abmessung mindestens 0,5 mm beträgt.

4. Verfahren nach Anspruch 3, **dadurch gekennzeichnet, dass** die zerkleinerte Biomasse in der Form von Teilchen ist, von denen mindestens 50 Gew.-% bezogen auf die getrocknete Masse aus Teilchen bestehen, deren kleinste Abmessung mindestens 0,5 mm beträgt und deren größte Abmessung höchstens 40 mm beträgt.

5. Verfahren nach einem der Ansprüche 1 bis 4, **dadurch gekennzeichnet, dass** der Schritt (b) in zwei Unterschritten durchgeführt wird, einem Schritt (b1), gemäß dem die Biomasse auf eine Temperatur von mehr als 120 °C vorerhitzt wird, und einem Schritt (b2), gemäß dem die im Schritt (b1) vorerhitzte Biomasse auf eine Temperatur von mehr als 220 °C erhitzt wird.

6. Verfahren nach Anspruch 5, **dadurch gekennzeichnet, dass** der Schritt (b1) bei einer Temperatur durchgeführt wird, die zwischen 180 und 220 °C eingestellt wird.

7. Verfahren nach Anspruch 5 oder 6, **dadurch gekennzeichnet, dass** der Schritt (b2) bei einer Temperatur durchgeführt wird, die zwischen 240 und 300 °C eingestellt wird.

8. Verfahren nach einem der vorhergehenden Ansprüche, **dadurch gekennzeichnet, dass** der Schritt (b) bei einem Druck durchgeführt wird, der von 3 bis 14 bar variiert.

9. Verfahren nach einem der vorhergehenden Ansprüche, **dadurch gekennzeichnet, dass** im Schritt (c) die Temperatur zwischen 350 und 500 °C aufrechterhalten wird.

10. Verfahren nach einem der vorhergehenden Ansprüche, **dadurch gekennzeichnet, dass** die Schritte (b) oder (b1) und (b2), (c) und (d) in mindestens zwei unterschiedlichen Kammern ausgeführt werden und das Verfahren kontinuierlich ist.

11. Verfahren nach Anspruch 10, **dadurch gekennzeichnet, dass** der Schritt (b1) in einer ersten Kammer ausgeführt wird, wobei die erste Kammer mit Konvektions- und/oder Wirbelschichtvorerhitzungsmitteln ausgestattet ist.

12. Verfahren nach Anspruch 11, **dadurch gekennzeichnet, dass** der Schritt (b2) in einer zweiten Kammer ausgeführt wird, wobei die zweite Kammer mit Strahlungserhitzungsmitteln ausgestattet ist.

13. Verfahren nach Anspruch 12, **dadurch gekennzeichnet, dass** der Schritt (c) in einer dritten Kammer ausgeführt wird, wobei die Kammer mit Temperatur- und Druckregelmitteln ausgestattet ist.

14. Verfahren nach Anspruch 13, **dadurch gekennzeichnet, dass** der Schritt (d) in einer vierten Kammer ausgeführt wird, wobei die Kammer mit Konvektions- und/oder Leitungskühlungsmitteln ausgestattet ist.

15. Verfahren nach Anspruch 13 oder 14, **dadurch gekennzeichnet, dass** die durch die Reaktion im Schritt (c) in der dritten Kammer abgestrahlte Wärme gewonnen wird und in die eine und/oder die andere von der ersten und der zweiten Kammer zurückgeführt wird und/oder zum Trocknen der im Schritt (a) erforderlichen Biomasse ist.

16. Verfahren nach einem der vorhergehenden Ansprüche, **dadurch gekennzeichnet, dass** die in den Schritten (b) und (c) erzeugten Gase stromaufwärts des Verfahrens im Gegenstrom zu dem Material rezirkuliert werden.

17. Verfahren nach einem der vorhergehenden Ansprüche, **dadurch gekennzeichnet, dass** die Biomasse eine Lignocellulose-Biomasse ist, umfassend mindestens einen Bestandteil, der aus Hemicellulose, Cellulose, Ligin, Kohlenhydraten und Oligosacchariden ausgewählt ist.

18. Verfahren nach einem der vorhergehenden Ansprüche, **dadurch gekennzeichnet, dass** der Schritt (b) im Inneren eines Kessels einer Strom- und/oder Wärmeerzeugungseinheit durchgeführt wird.

19. Verfahren nach einem der vorhergehenden Ansprüche, **dadurch gekennzeichnet, dass** es in Abwesenheit von jeglicher Zufuhr von externem Inertgas umgesetzt wird.

20. Biokohle, die durch das Verfahren nach einem der Ansprüche 1 bis 19 erhalten werden kann, wobei die Biokohle einen Kohlenstoffgehalt von mehr als 80 Massen-% und einen Sauerstoffgehalt in einem Gehalt von weniger als oder gleich 10 Massen-% aufweist.

21. Biokohle nach Anspruch 20, **dadurch gekennzeichnet, dass** sie einen Heizwert (Hi) von mindestens 30 MJ/kg aufweist.

## Claims

1. A method for transforming a biomass into at least one biochar, comprising the following steps:
(a) a ground and dried biomass is available, said biomass containing at least 30% of a lignocellulosic biomass, by mass relative to the dry mass of the ground and dried biomass, said biomass being in the form of particles with homogeneous dimensions and having a moisture content close to 0;
(b) this biomass is progressively heated to a temperature higher than 140°C and lower than 350°C, in a gas stream devoid of oxygen, under a pressure comprised between 1 and 40 bar;
(c) the reaction is allowed to proceed while maintaining the temperature in the range of 300-700°C and the pressure in the range of 1-40 bar,
(d) the biomass resulting from (c) is cooled to a temperature of at most 100°C, in a gas stream devoid of oxygen, and
(e) the biochar is recovered.

2. The method according to claim 1, **characterized in that** a combustible gas is obtained as co-product.

3. The method according to claim 1 or 2, **characterized in that** the ground biomass is in the form of particles of which at least 50% by weight relative to the dried mass consist of particles whose smallest dimension is at least 0.5 mm.

4. The method according to claim 3, **characterized in that** the ground biomass is in the form of particles of which at least 50% by weight relative to the dried mass consist of particles whose smallest dimension is at least 0.5 mm and whose largest dimension is at most 40 mm.

5. The method according to any one of claims 1 to 4, **characterized in that** step (b) is carried out in two sub-steps, a step (b1) according to which the biomass is preheated to a temperature higher than 120°C and a step (b2) according to which the biomass preheated at step (b1) is heated to a temperature higher than 220°C.

6. The method according to claim 5, **characterized in that** step (b1) is carried out at a temperature set between 180 and 220°C.

7. The method according to claim 5 or 6, **characterized in that** step (b2) is carried out at a temperature set between 240 and 300°C.

8. The method according to any one of the preceding claims, **characterized in that** step (b) is carried out at a pressure varying from 3 to 14 bar.

9. The method according to any one of the preceding claims, **characterized in that** at step (c), the temperature is maintained between 350 and 500°C.

10. The method according to any one of the preceding claims, **characterized in that** steps (b) or (b1) and (b2), (c) and (d) are performed in at least two different compartments and the method is continuous.

11. The method according to claim 10, **characterized in that** step (b1) is performed in a first compartment, said first compartment being equipped with convection and/or fluidized bed preheating means.

12. The method according to claim 11, **characterized in that** step (b2) is performed in a second compartment, said second compartment being equipped with radiant heating means.

13. The method according to claim 12, **characterized in that** step (c) is performed in a third compartment, said compartment being equipped with temperature and pressure control means.

14. The method according to claim 13, **characterized in that** step (d) is performed in a fourth compartment, said compartment being equipped with convection and/or conduction cooling means.

15. The method according to claim 13 or 14, **characterized in that** the heat emitted by the reaction at step (c) in the third compartment is recovered and is recycled in one or both of the first and second compartments and/or to dry the biomass necessary at step (a).

16. The method according to any one of the preceding claims, **characterized in that** the gases generated at steps (b) and (c) are recirculated upstream of the method, against the current of the material.

17. The method according to any one of the preceding claims, **characterized in that** the biomass is a lignocellulosic biomass comprising at least one constituent selected from hemicellulose, cellulose, lignin, carbohydrates and oligosaccharides.

18. The method according to any one of the preceding claims, **characterized in that** step (b) is carried out inside a boiler of an electrical and/or thermal generation unit.

19. The method according to any one of the preceding claims, **characterized in that** it can be implemented in the absence of any supply of external inert gas.

20. A biochar obtainable by the method according to any one of claims 1 to 19, said biochar having a carbon content greater than 80% by mass and an oxygen content in a content less than or equal to 10% by mass.

21. The biochar according to claim 20, **characterized in that** it has a lower calorific value (LCV) of at least 30 MJ/kg.
